# EUROPÄISCHE PATENTSCHRIFT

(11) **EP 0 574 388 B1**
(45) Veröffentlichungstag und Bekanntmachung des Hinweises auf die Patenterteilung: **30.11.1994**
(21) Anmeldenummer: 91916562.1
(22) Anmeldetag: 18.09.1991
(51) Int. Cl.: B30B 15/30, B27N 3/22

(54) **VERFAHREN UND VORRICHTUNG ZUR HERSTELLUNG VON HOCHDRUCK-SCHICHTPRESSSTOFFPLATTEN**
PROCESS AND DEVICE FOR THE MANUFACTURE OF HIGH-PRESSURE LAMINATES
PROCEDE ET DISPOSITIF POUR LA FABRICATION DE PLAQUES STRATIFIEES MOULEES A HAUTE PRESSION

(30) Priorität: 07.03.1991 DE 4107249
(43) Veröffentlichungstag der Anmeldung: 22.12.1993
(73) Patentinhaber: RESOPAL GMBH, D-64823 Gross-Umstadt (DE)
(72) Erfinder: SCHIKARSKI, Horst, J., D-6940 Weinheim (DE); BARANOWSKI, Klaus, D-6940 Weinheim (DE); KOSA, Charles, Toronto, Ontario M9A 2Y7 (CA); MÜLLER, Gert, D-6120 Michelstadt-Steinbuch (DE); RUDOLPH, Reinhold, D-8753 Obernburg-Eisenbach (DE); COLYER, Dennis, Newmarket, Ontario L3Y 6EI (CA)
(74) Vertreter: Katscher, Helmut, Dipl.-Ing.
(86) Internationale Anmeldenummer: EP9101774
(87) Internationale Veröffentlichungsnummer: WO9215449

(56) Entgegenhaltungen:
- DE-A- 3 012 677
- DE-B- 2 109 539
- DE-B- 2 217 396
- GB-A- 2 048 221
- US-A- 3 828 997
- US-A- 3 977 535

## Beschreibung

Die Erfindung betrifft ein Verfahren zur Herstellung von Hochdruck-Schichtpreßstoffplatten aus kunstharzimprägnierten Papierbögen in einer Einetagen-Heizpresse, wobei das aus mehreren Lagen von Papierbögen bestehende Preßgut an seinen beiden Längsrändern von längsbeweglichen Klemmeinrichtungen erfaßt und in die Einetagen-Heizpresse hinein, bzw. aus dieser heraustransportiert wird.

Hochdruck-Schichtpreßstoffplatten (HPL-Platten), insbesondere dekorative Schichtpreßstoffplatten nach DIN 16 926, werden aus kunstharzimprägnierten Papierbögen hergestellt, die in Heizpressen unter hohem Druck verpreßt werden. üblicherweise werden hierzu Mehretagenpressen verwendet, die mit dem auf das gewünschte Format geschnittenen Preßgut mit zwischengelegten Preßblechen oder Matrizen auf Transportblechen beschickt werden. Jeder Preßzyklus, der das Aufheizen und Abkühlen der Preßplatten umfaßt, beansprucht einen Zeitaufwand von etwa 1-2 Stunden. Die Notwendigkeit, bei jedem Preßvorgang eine größere Anzahl von Preßblechen oder Matrizen zu verwenden, stellt einen mit erheblichen Kosten verbundenen Aufwand dar. Das zyklische Aufheizen und Abkühlen der Preßplatten führt zu hohem Energiebedarf.

Daneben ist es auch bekannt, Schichtpreßstoffplatten in endlosen Bahnen in Doppelbandpressen kontinuierlich herzustellen. Hierbei wird das aus Rollenmagazinen zugeführte Preßgut zwischen Stahlbändern im Durchlauf gepreßt. Die Oberflächenstrukturierung erfolgt hierbei über mitlaufende geprägte Papierbahnen, da eine Gravur der Stahlbänder und deren Wechsel zur Umstellung auf unterschiedliche Oberflächenstrukturen unwirtschaftlich wäre.

Die in Doppelbandpressen erzielbaren Preßdrücke sind wesentlich geringer als bei diskontinuierlichen Pressen.

Bei einem bekannten Verfahren der eingangs genannten Gattung (DE-PS 2 217 396) wird eine Einetagen-Heizpresse verwendet. Das Preßgut zur Herstellung jeweils einer einzelnen Hochdruck-Schichtpreßstoffplatte wird an seinen beiden Längsrändern von zwei Klemmleisten erfaßt, die das Preßgut in die Heizpresse hineintransportieren und dort freigeben. Nach dem Preßvorgang wird das Preßgut an seinen beiden Längsrändern wieder von Klemmleisten erfaßt und aus der Heizpresse heraustransportiert. Zu diesem Zweck werden die Klemmleisten in Transportrichtung hin- und herbewegt. Mit den Klemmleisten kann auf diese Weise nur eine einzige Arbeitsstation, nämlich die Heizpresse bedient werden. Das Preßgut muß bei jedem Transportvorgang erneut erfaßt und wieder losgelassen werden. Es kann sich dabei verschieben.

Aufgabe der Erfindung ist es, ein Verfahren der eingangs genannten Gattung so auszubilden, daß auch verhältnismäßig dünne Hochdruck-Schichtpreßstoffplatten mit hohen Preßdrücken aber gleichwohl sehr kurzen Preßzyklen hergestellt werden können, wobei eine exakte Führung des Preßgutes sichergestellt ist.

Diese Aufgabe wird erfindungsgemäß dadurch gelöst, daß die Klemmeinrichtungen an endlos umlaufenden Transportsträngen angebrachte einzelne Transportklemmen sind und daß das Preßgut von den Transportklemmen während des Transports in die Einetagen-Heizpresse, während des Preßvorgangs und während des Transports aus der Einetagen-Heizpresse hinaus ununterbrochen gehalten und geführt wird.

Da das Preßgut ständig von den Transportklemmen gehalten und geführt wird, besteht keine Gefahr, daß sich vor den Preßvorgang die einzelnen Bögen gegeneinander verschieben oder daß sich das Preßgut gegenüber den die Oberflächenstruktur bewirkenden Preßblechen verschiebt. Damit wird bei dekorativen Schichtpreßstoffplatten die Ausrichtung einer eventuellen Dekorzeichnung zu einer von den Preßblechen erzeugten Oberflächenstruktur gewährleistet.

Durch die exakte und ununterbrochene Führung des Preßguts vor, während und nach dem Preßvorgang wird eine ungleiche Temperaturbelastung des Preßgutes sicher vermieden.

Gemäß einer bevorzugten Ausführungsform der Erfindung ist vorgesehen, daß das Preßgut von den Transportklemmen in einer Beschickstation übernommen und bei ständig geschlossen bleibenden Transportklemmen taktweise in die Einetagen-Heizpresse und eine nachfolgende Kühlpresse transportiert wird.

Damit wird nicht nur die Einhaltung gleichbleibender Verfahrensparameter beim Heizpreßvorgang, sondern auch beim anschließenden Kühlvorgang erreicht, wobei eine gleichbleibende hohe Qualität der erzeugten Schichtpreßstoffplatten sichergestellt ist.

In weiterer Ausgestaltung des Erfindungsgedankens ist vorgesehen, daß das Preßgut nach dem Verlassen der Einetagen-Heizpresse bzw. der Kühlpresse durch eine Besäumstation transportiert wird, in der die von den Transportklemmen gehaltenen Längsränder besäumt werden.

Durch die kontinuierliche Führung des Preßguts durch die Transportklemmen wird einerseits eine kontinuierliche Besäumung der Längsränder ermöglicht; andererseits wird dabei sichergestellt, daß die Schichtpreßstoffplatten auch beim Besäumvorgang ihre exakte Ausrichtung beibehalten, so daß die Parallelität der Besäumschnitte zu einer eventuellen Dekorzeichnung und/oder Textur der Oberfläche gewährleistet ist.

Die exakte Führung des Preßgutes im Bereich der Heizpresse ermöglicht nicht nur, die Zykluszeit für den Heizvorgang sehr niedrig zu wählen, sondern auch eine exakte Einhaltung der vorgegebenen Heizdauer, was für die Qualität des Produktes von entscheidender Bedeutung ist. Eine weitere Verringerung der Herstellungszeit durch doppelte Ausnützung der für den Heizzyklus vorzusehenden Zeitspanne wird gemäß einer weiteren Ausgestaltung des Erfindungsgedankens dadurch erreicht, daß das Preßgut jeweils aus zwei Stapeln von kunstharzimprägnierten Papierbögen mit einer dazwischen eingelegten Trennfolie besteht, die gemeinsam von den Transportklemmen erfaßt und gehalten werden.

Mit der Erfindung wild ermöglicht, das Preßgut schwebend in die Heizpresse einzutragen. Die Presse wird nach den Eintragen so geschlossen, daß das Preßgut gleichzeitig mit den Heizplatten in Berührung kommt. So wird eine gleichmäßige Beheizung des Preßgutes sichergestellt.

Die Erfindung betrifft auch eine Vorrichtung zur Durchführung des erfindungsgemäßen Verfahrens. Diese Vorrichtung mit einer Einetagen-Heizpresse, die eine obere und eine untere Heizplatte mit jeweils daran befestigten Preßblechen aufweist, und mit das Preßgut an seinen beiden Längsrändern haltenden und transportierenden Klemmeinrichtungen, ist dadurch gekennzeichnet, daß die Klemmeinrichtungen einzelne Transportklemmen sind, die jeweils an einem gemeinsamen, endlos umlaufenden, taktweise angetriebenen Transportstrang angebracht sind, der von einer Beschickstation mindestens bis über die Einetagen-Heizpresse hinaus verläuft.

Vorzugsweise werden die beiden Transportstränge jeweils von einer endlos umlaufenden Laschengliederkette gebildet, die die einzelnen Transportklemmen trägt.

Gemäß einer bevorzugten Ausführungsform ist vorgesehen, daß die einzelnen Transportklemmen jeweils an einem Klemmenwagen angebracht sind, der an Führungsschienen in Transportrichtung geführt wird und mit einem Glied der Laschengliederkette verbunden ist. Damit wird eine sehr genaue Führung der einzelnen Transportklemmen erreicht, wobei sich die auftretenden Querkräfte sowie die Kräfte zum Tragen des Preßgutes an den Führungsschienen abstützen und den endlos umlaufenden Transportstrang, beispielsweise die Laschengliederkette, nicht belasten.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist. Es zeigt:
Fig. 1 eine vereinfachte Draufsicht auf eine Anlage zur Herstellung von Hochdruck-Schichtpreßstoffplatten,
Fig. 2 eine Draufsicht auf die Beschickstation der Anlage nach Fig. 1,
Fig. 3 einen Schnitt längs der Linie III-III in Fig. 2,
Fig. 4 einen vergrößerten Teilschnitt längs der Linie IV-IV in Fig. 3,
Fig. 5 einen Teilschnitt ähnlich der Fig. 4 mit ausgewechselten, längeren Klemmschenkeln der Transportklemmen und
Fig. 6 einen vergrößerten Teil-Längsschnitt an der Heizpresse längs der Linie VI-VI in Fig. 1.

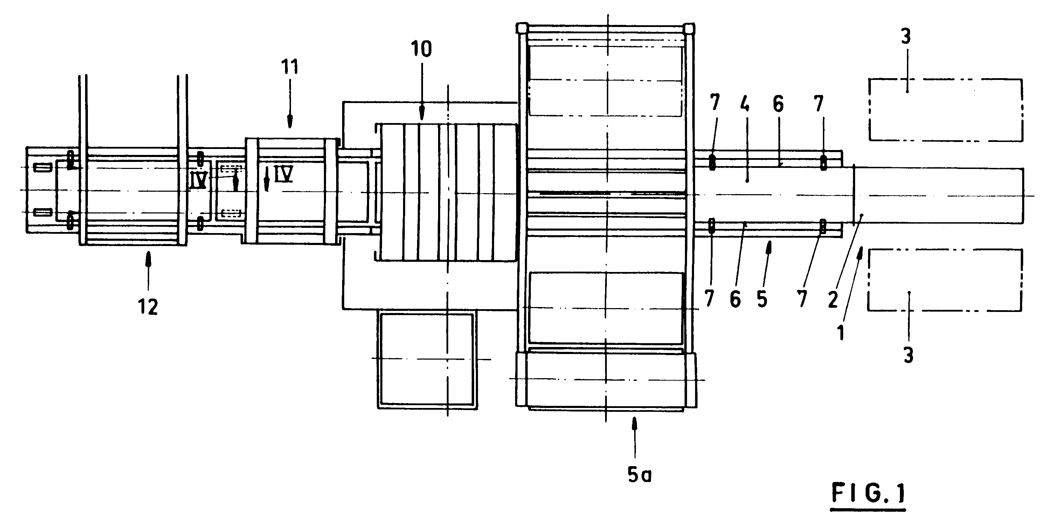

Die in Fig. 1 vereinfacht dargestellte Anlage zur Herstellung von Hochdruck-Schichtpreßstoffplatten weist eine Vorbereitungsstation 1 auf, in der auf einem Bandförderer 2 kunstharzimprägnierte Papierbögen zu einem das Preßgut bildenden Stapel zusammengelegt werden. Die Papierbögen werden hierzu aus Fächern von seitlich angeordneten Regalen 3 oder aus einem Rollenmagazin gezogen. Bei der Verwendung eines Rollenmagazins werden kunststoffimprägnierte Papierbahnen abgezogen und durch eine Querschneideeinrichtung auf die gewünschte Länge geschnitten. Der Aufbau des Preßgutes kann variieren; für die Herstellung von dekorativen Schichtpreßstoffplatten umfaßt er jedoch zumindest einen Dekorpapierbogen und einen Kernpapierbogen. Zusätzlich kann der Dekorpapierbogen mit einem Overlay-Bogen abgedeckt sein. Wenn bei jedem Pressentakt jeweils zwei Schichtpreßstoffplatten hergestellt werden sollen, werden zwei Stapel von kunstharzimprägnierten Papierbögen zusammengestellt, zwischen die eine Trennfolie 4a oder ein Trennbogen eingelegt wird.

Der Bandförderer 2 bringt das Preßgut 4 in eine Beschickstation 5. Der Bandförderer 2 hebt dann auf das Niveau der Transportklemmen 7 an. Danach werden die Längsränder 6 des Preßguts 4 von später noch näher beschriebenen Transportklemmen 7 erfaßt, und das Preßgut wird in der Breite gespannt. Dabei senkt sich der Bandförderer 2 ab, so daß er das Preßgut 4 nicht mehr berührt.

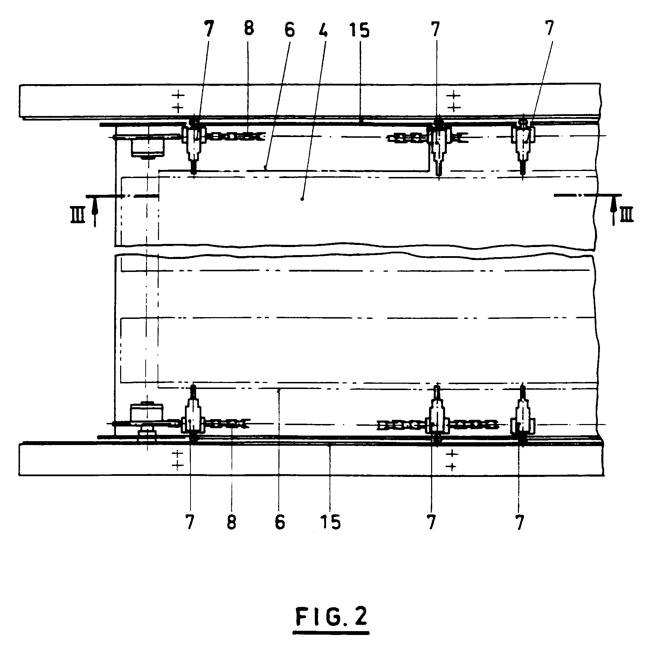

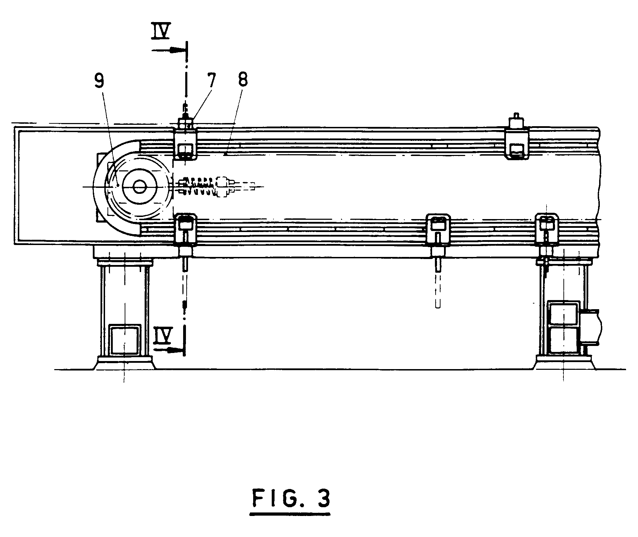

Wie in den Fig. 2-5 dargestellt, sind die Transportklemmen 7 auf jeder Seite des Preßgutes 4 jeweils an einer endlos umlaufenden Laschengliederkette 8 angebracht, die über teilweise angetriebene Kettenräder 9 umläuft. Die Laschengliederketten 8 verlaufen von der Beschicktstation 5, durch eine Preßblech-Wechselstation 5a, die Einetagen-Heizpresse 10 und eine nachgeordnete Kühlpresse 11 bis zu einer Austafelstation 12. Dabei wird das Preßgut 4 ununterbrochen von den Transportklemmen 7 festgehalten und geführt. Das Schließen der Transportklemmen 7 erfolgt in der Beschickstation 5; erst in der Austafelstation 12 werden die Transportklemmen 7 wieder geöffnet.

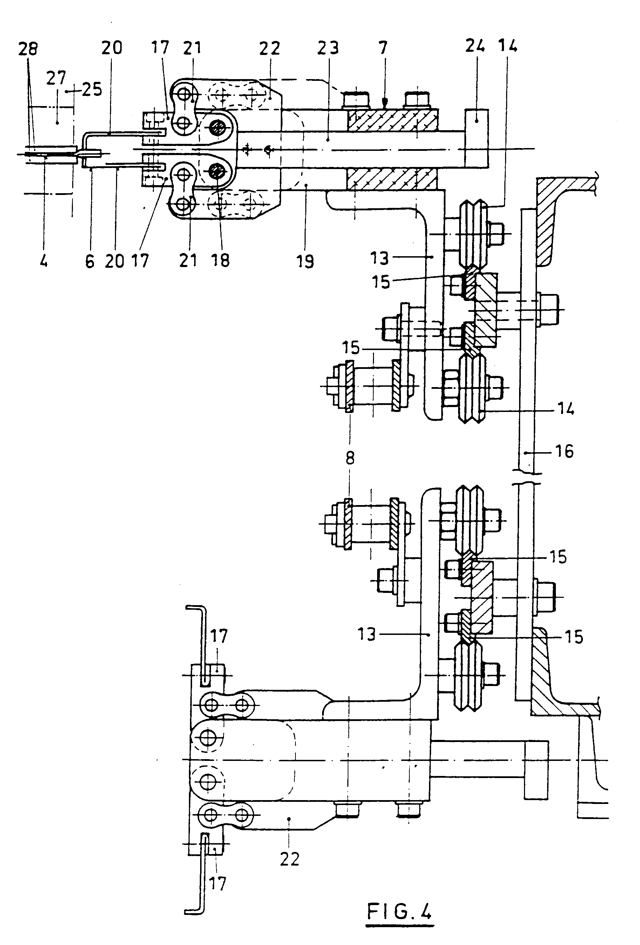

Wie in Fig. 4 in Einzelheiten dargestellt ist, ist jede Transportklemme 7 an einem Klemmenwagen 13 angebracht, der mittels Führungsrollen 14 an Führungsschienen 15 in Transportrichtung geführt wird. Die Führungsschienen 15 sind an einem Gestell 16 angebracht. Man erkennt aus Fig. 4, daß die Führung der Klemmenwagen 13 sowohl beim Hinals auch beim Rücklauf erfolgt. Der Klemmenwagen 13 ist mit der Laschengliederkette 8 verbunden und wird von dieser mitgenommen.

Jede Transportklemme weist zwei zangenartig schließbare Klemmschenkel 17 auf. Jeder Klemmschenkel 17 ist in einem Gelenk 18 an einem Träger 19 gelagert, der an dem Klemmenwagen 13 angeschraubt ist.

Jeder Klemmschenkel 17 hat eine federnde Zunge 20. Im geschlossenen Zustand der Transportklemmen 7 (oben in Fig. 4) ist zwischen den gegeneinander abgewinkelten Enden der Zungen 20 der Längsrand 6 des Preßguts 4 eingeklemmt.

Die beiden am Träger 19 übereinander gelagerten Klemmschenkel 17 sind jeweils über ein Knebelglied 21 nach Art eines Lenkers gelenkig mit einem gemeinsamen, entlang dem Träger 19 bewegbaren Verschlußschieber 22 verbunden und bilden jeweils einen Knebelverschluß für die Transportklemme 7.

Der Verschlußschieber 22 steht über eine im Träger 19 verschiebbar geführte Stange 23 mit einem sich entgegengesetzt zu den Klemmschenkeln 20 erstreckenden Steuernocken 24 in Verbindung. Zum Öffnen und Schließen der Transportklemme 7 tritt der Nocken 24 mit einem Entriegelungsantrieb oder Verriegelungsantrieb (nicht dargestellt) in Eingriff, der den Verschlußschieber 22 aus der in Fig. 4 oben gezeigten geschlossenen Stellung in die in Fig. 4 unten gezeigte geöffnete Stellung verschiebt und umgekehrt. In der geschlossenen Stellung bleibt die Transportklemme 7 verriegelt, weil der Verschlußschieber 22 die Knebelglieder 21 etwas über ihre Totpunktlage hinaus verschwenkt hat.

In der zurückgezogenen Stellung des Verschlußschiebers 22 (unten in Fig. 4) sind die beiden Klemmschenkel 17 nach oben und unten auseinandergeschwenkt und haben den Rand des Preßgutes freigegeben.

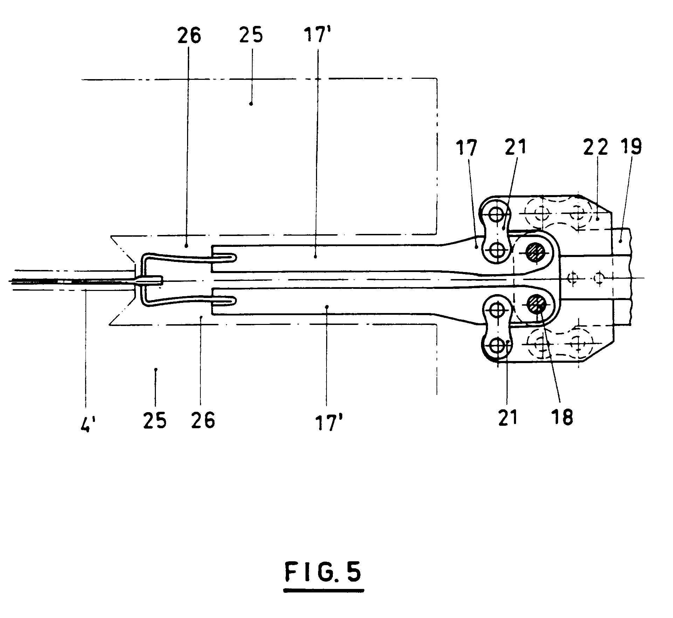

In Fig. 5 ist gezeigt, daß die in Fig. 4 dargestellten, kürzeren Klemmschenkel 17 gegen längere Klemmschenkel 17' ausgewechselt werden können, wenn Preßgut 4' von geringerer Breite als das vorher geschilderte Preßgut 4 aufgenommen werden soll.

Die in den Fig. 4 und 5 mit strichpunktierten Linien nur in ihren Umrissen angedeuteten Heizplatten 25 der Einetagen-Heizpresse 11 weisen seitliche Ausnehmungen 26 auf, in die die längeren Klemmschenkel 17' hineinragen, wenn die Heizfläche zur Verarbeitung schmaleren Preßguts 4' verkleinert wurde (Fig. 5).

Wenn die Heizplatten 25 in ihrer vollen Breite ausgenutzt werden, werden diese Ausnehmungen 26 jeweils durch ein Paßstück 27 ausgefüllt und verschlossen, wie in Fig. 4 angedeutet ist. Die Paßstücke 27 können beispielsweise magnetisch in den Ausnehmungen 26 gehalten werden.

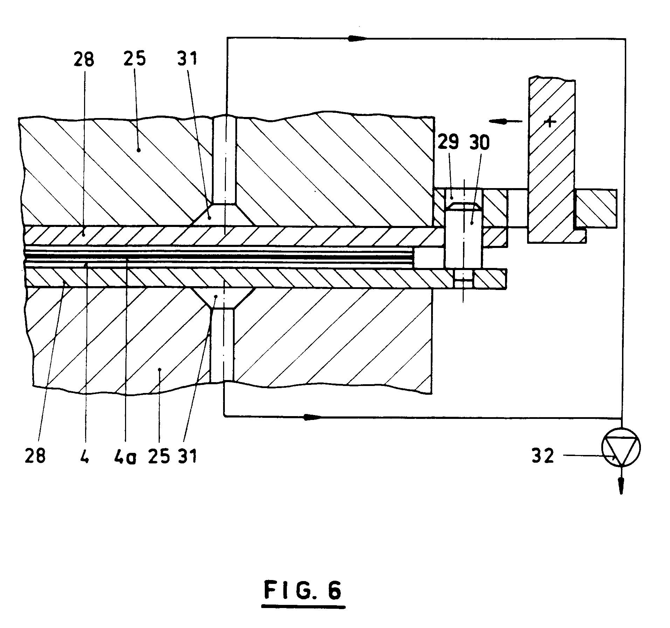

Als Preßmittel werden an den dem Preßgut 4 bzw. 4' zugekehrten Flächen der Heizplatten 25 Preßmittel in Form von Matrizen oder Preßblechen 28 angebracht. In Fig. 6 ist dargestellt, daß die Preßbleche 28 jeweils an ihrer in Transportrichtung des Preßgutes 4 gesehen vorderen Kante über Zentrierlöcher 29 und Zentrierstifte 30 an den Heizplatten 25 so zentriert sind, daß sie an ihren Längskanten kantenbündig mit den Längskanten der Heizplatten 25 verlaufen. Um die Preßbleche 28 auch bei geöffneter Heizpresse in innigem Kontakt mit den Heizplatten 25 zu halten, sind die Heizplatten 25 mit zahlreichen Saugöffnungen 31 versehen, die mit einer gemeinsamen Unterdruckquelle, beispielsweise einer Vakuumpumpe 32 verbunden sind. Durch diese flächige Festlegung der Preßbleche 28 an den Heizplatten 25 wird erreicht, daß die Preßbleche 28 an der oberen Heizplatte 25 nicht durchhängen, da eine Befestigung an den Längsrändern nicht möglich ist. So wird das obere Preßblech 28 auch bei geöffneter Heizpresse in enger Berührung mit der oberen Heizplatte 25 gehalten.

Ein besonderer Vorteil der beschriebenen Klemmeinrichtungen für das Preßgut 4 besteht darin, daß das Preßgut 4 im Gleichtakt nach der Heizpresse 10 durch die Kühlpresse 11 gefördert werden kann und daß dabei eine exakte Positionierung zu den Kühlflächen gewährleistet ist. Die Rückkühlung unter einem Druck, der nur einen innigen Kontakt zwischen der Oberfläche des Preßgutes 4 und den Kühlflächen sicherstellen muß, bewirkt eine gute Planlage der fertiggestellten Hochdruck-Schichtpreßstoffplatten. Außerdem wird ein möglicher Glanzverlust an der Dekoroberfläche, der sonst durch zu rasches Ausdünsten auftreten könnte, stark vermindert.

Um mit zunehmender Abkühlung ein Verspröden der Ränder des Preßgutes 4 zu vermeiden, an denen die Transportklemmen 7 angreifen, werden die Kühlplatten der Kühlpresse 11 schmaler als die Heizplatten 25 der Heizpresse 10 ausgeführt.

Die Einetagen-Heizpresse 10 ist eine schnellschließende Presse, die so ausgelegt ist, daß auf das Preßgut 4 auch bei dem größtmöglichen Format von beispielsweise 1545 mm x 3700 mm ein Druck von mindestens 100 bar ausgeübt werden kann. Die Ausnehmungen 26 sind beispielsweise 110 mm tief, um die Preßfläche auf beispielsweise 1325 mm x 3700 mm verkleinern zu können.

Die Austafelstation 12 kann zugleich als Längsbesäumstation ausgeführt sein; stattdessen kann der Austafelstation 12 auch eine (nicht dargestellte) Besäumstation nachgeschaltet sein. Das Preßgut 4 wird nach dem Verlassen der Kühlpresse 11 durch diese Besäumstation transportiert. Dort werden die von den Transportklemmen 7 gehaltenen Längsränder 6 durch Besäumsägen abgetrennt.

## Patentansprüche

1. Verfahren zur Herstellung von Hochdruck-Schichtpreßstoffplatten aus kunstharzimprägnierten Papierbögen in einer Einetagen-Heizpresse, wobei das aus mehreren Lagen von Papierbögen bestehende Preßgut an seinen beiden Längsrändern von längsbeweglichen Klemmeinrichtungen erfaßt und in die Einetagen-Heizpresse hinein, bzw. aus dieser heraustransportiert wird, dadurch gekennzeichnet, daß die Klemmeinrichtungen an endlos umlaufenden Transportsträngen (8) angebrachte einzelne Transportklemmen (7) sind und daß das Preßgut (4) von den Transportklemmen (7) während des Transports in die Einetagen-Heizpresse (10), während des Preßvorgangs und während des Transports aus der Einetagen-Heizpresse (10) hinaus ununterbrochen gehalten und geführt wird.

2. Verfahren nach Anspruch 1, dadurch gekennzeichnet, daß das Preßgut (4) von den Transportklemmen (7) in einer Beschickstation (5) übernommen und bei ständig geschlossen bleibenden Transportklemmen (7) taktweise durch eine Preßblech-Wechselstation (5a) in die Einetagen-Heizpresse (10) und eine nachfolgende Kühlpresse (11) transportiert wird.

3. Verfahren nach Anspruch 1 oder 2, dadurch gekennzeichnet, daß das Preßgut (4) nach dem Verlassen der Einetagen-Heizpresse (10) bzw. der Kühlpresse (11) durch eine Besäumstation (12) transportiert wird, in der die von den Transportklemmen (7) gehaltenen Längsränder (6) besäumt werden.

4. Verfahren nach Anspruch 1, dadurch gekennzeichnet, daß aus einem Rollenmagazin kunstharzimprägnierte Papierbahnen abgezogen und durch eine Querschneideeinrichtung auf die gewünschte Länge geschnitten werden.

5. Verfahren nach Anspruch 1, dadurch gekennzeichnet, daß das Preßgut (4) jeweils aus zwei Stapeln von kunstharzimprägnierten Papierbögen mit einer dazwischen eingelegten Trennfolie (4a) besteht, die gemeinsam von den Transportklemmen (7) erfaßt und gehalten werden.

6. Vorrichtung zur Durchführung des Verfahrens nach einem der Ansprüche 1-5 mit einer Einetagen-Heizpresse die eine obere und eine untere Heizplatte mit jeweils daran befestigten Preßblechen aufweist, und mit das Preßgut an seinen beiden Längsrändern haltenden und transportierenden Klemmeinrichtungen, dadurch gekennzeichnet, daß die Klemmeinrichtungen einzelne Transportklemmen (7) sind, die jeweils an einem gemeinsamen, endlos umlaufenden, taktweise angetriebenen Transportstrang (8) angebracht sind, der von einer Beschickstation (1) mindestens über die Einetagen-Heizpresse (10) hinaus verläuft.

7. Vorrichtung nach Anspruch 6, dadurch gekennzeichnet, daß die beiden Transportstränge jeweils von einer endlos umlaufenden Laschengliederkette (8) gebildet werden.

8. Vorrichtung nach Anspruch 6, daduch gekennzeichnet, daß die einzelnen Transportklemmen (7) jeweils an einem Klemmenwagen (13) angebracht sind, der an Führungsschienen (15) in Transportrichtung geführt wird und mit einem Glied der Laschengliederkette (8) verbunden ist.

9. Vorrichtung nach Anspruch 6, dadurch gekennzeichnet, daß jede Transportklemme (7) zwei zangenartig schließbare Klemmschenkel (17) aufweist.

10. Vorrichtung nach Ansprüchen 8 und 9, dadurch gekennzeichnet, daß die beiden Klemmschenkel (17) an einem mit dem Klemmenwagen (13) starr verbundenen Träger (19) gelagert sind und jweils über einen Knebelverschluß (21, 22) in ihrer geschlossenen Stellung haltbar sind.

11. Vorrichtung nach Anspruch 10, dadurch gekennzeichnet, daß ein gemeinsamer, entlang dem Träger (19) bewegbarer Verschlußschieber (22) über zwei Knebelglieder (21) gelenkig mit den beiden Klemmschenkeln (17) verbunden ist.

12. Vorrichtung nach Anspruch 9, dadurch gekennzeichnet, daß die Klemmschenkel (17, 17') auswechselbar mit unterschiedlicher Länge ausgeführt sind.

13. Vorrichtung nach Anspruch 12, dadurch gekennzeichnet, daß die Heizplatten (25) der Einetagen-Heizpresse (10) seitliche Ausnehmungen (26) aufweisen, in die die Klemmschenkel (17') in einer längeren Ausführungsform hineinragen.

14. Vorrichtung nach Anspruch 13, dadurch gekennzeichnet, daß die Ausnehmung (26) durch Paßstücke (27) verschließbar sind.

15. Vorrichtung nach Anspruch 14, dadurch gekennzeichnet, daß die Paßstücke (27) in den Ausnehmungen (26) magnetisch haltbar sind.

16. Vorrichtung nach Anspruch 6, dadurch gekennzeichnet, daß die Preßbleche (28) an ihren Längskanten kantenbündig mit den Längskanten der Heizplatten (25) verlaufen, daß die Preßbleche (28) jeweils an der Vorderkante an den Heizplatten (25) zentriert sind und daß die Heizplatten mehrere mit einer Unterdruckquelle (32) verbindbare Saugöffnungen (31) zum Halten der Preßbleche (28) aufweisen.

17. Vorrichtung nach Anspruch 6 zur Durchführung des Verfahrens nach Anspruch 2, dadurch gekennzeichnet, daß die Kühlpresse (11) Kühlplatten aufweist, die schmaler als die Heizplatten (25) der Einetagen-Heizpresse (10) sind.

## Claims

1. A process for the manufacture of high-pressure laminates made of synthetic-resin impregnated paper sheets in a single daylight hot press, whereby the laminate consisting of several layers of paper sheets is picked up at both its longitudinal edges by longitudinally movable clamping means and transferred into and out of the single daylight hot press, characterized in that the clamping means consist of individual transfer clamps (7) attached to endlessly rotating transfer strands (8) and that during the transfer into the single daylight hot press (10), during the pressing process, and during the transfer out of the single daylight hot press (10), the laminate (4) is continuously held and guided by the transfer clamps (7).

2. The process according to claim 1, characterized in that laminate (4) is taken over by the transfer clamps (7) in a loading station (5) and is moved in stages through a caul plate changing station (5a), into the single daylight hot press (10) and into a subsequent cold press (11), while the transfer clamps (7) remain constantly closed.

3. The process according to claim 1 or 2, characterized in that after the laminate (4) leaves the single daylight hot press (10) or the cold press (11), it is transferred through a trimming station (12) in which the longitudinal edges (6) held by the transfer clamps (7) are trimmed.

4. The process according to claim 1, characterized in that synthetic-resin impregnated paper webs are unrolled from an unwind stand and cut to the desired length with a transverse cutting apparatus.

5. The process according to claim 1, characterized in that the laminate (4) consists of two stacks of synthetic-resin impregnated paper sheets with separator foil (4a) inserted beween them, which are jointly picked up and held by the transfer clamps (7).

6. An apparatus for implementing the process according to one of the claims 1-5 with a single daylight hot press comprising a top and a bottom hot platen, each with attached caul plates, and with clamping means holding and transferring the laminate at its two longitudinal edges, characterized in that the clamping means are individual transfer clamps (7), each of which is arranged on an endlessly rotating transfer strand (8) driven by strokes, which extends from a loading station (1) to at least beyond the single daylight hot press (10)

7. The apparatus according to claim 6, characterized in that each of the two transfer strands is formed by an endlessly rotating flat-link chain (8).

8. The apparatus according to claim 6, characterized in that each of the individual transfer clamps (7) is arranged in a clamp cart (13) that is guided in guide tracks (15) in transfer direction and that is connected to a link of the flat-link chain (8).

9. The apparatus according to claim 6, characterized in that each transfer clamp (7) is provided with two clamping legs (17) that can be locked like pliers.

10. The apparatus according to claims 8 and 9, characterized in that the two clamping legs (17) are mounted at a bracket (19) rigidly connected to the clamp cart (13) and that each can be held in its closed position via a toggle closure (21, 22).

11. The apparatus according to claim 10, characterized in that a common locking slide (22) movable along carrier (19) via two toggle links (21) is flexibly connected to the two clamping legs (17).

12. The apparatus according to claim 9, characterized in that the clamping legs (17, 17') are designed so that their length can vary.

13. The apparatus according to claim 12, characterized in that the hot platens (25) of the single daylight hot press (10) are provided with lateral recesses (26) into which the clamping legs (17') protrude in case of a version with a longer design.

14. The apparatus according to claim 13, characterized in that the recess (26) can be closed by means of adapters (27).

15. The apparatus according to claim 14, characterized in that the adapters (27) can be held in the recesses magnetically.

16. The apparatus according to claim 6, characterized in that the longitudinal edges of the caul plates (28) run parallel to the longitudinal edges of the hot platens (25), that the frontal edge of each caul plate (28) is centered and that the hot platens are provided with several vacuum openings (31) that can be connected to a vacuum source (32) for holding the caul plates (28).

17. The apparatus to claim 6, for implementing the process according to claim 2, characterized in that the cold press (11) is provided with cold plates that are narrower than the hot platens (25) of the single daylight hot press (10).

## Revendications

1. Procédé de fabrication de plaques stratifiées par moulage sous haute pression de feuilles de papier imprégnées de résine synthétique dans une presse à chaud à un étage, dans lequel la matière à presser constituée de plusieurs couches de feuilles de papier est saisie, sur ses deux bords longitudinaux, par des dispositifs à pinces et est transportée dans la presse à chaud à un étage ou en est éloignée, caractérisé en ce que les dispositifs à pinces sont des pinces de transport individuelles (7) montées sur des cordes de transport (8) tournant sans fin et la matière à presser (4) est maintenue et acheminée en continu par les pinces de transport (7) au cours du transport dans la presse à chaud à un étage (10), au cours de l'opération de compression et au cours du transport hors de la presse à chaud à un étage (10).

2. Procédé selon la revendication 1, caractérisé en ce que la matière à presser (4) est prise en charge par les pinces de transport (7) dans une station de chargement (5) et transportée, les pinces de transport (7) restant fermées en permanence, en séquence à travers une station de changement de tôle à presser (5a) dans la presse à chaud à un étage, puis dans une presse à froid (11).

3. Procédé selon la revendication 1 ou 2, caractérisé en ce que la matière à presser (4), après avoir quitté la presse à chaud à un étage (10) ou la presse à froid (11), est transportée à travers une station de rognage (12), dans laquelle les bords longitudinaux (6) tenus par les pinces de transport (7) sont rognés.

4. Procédé selon la revendication 1, dans lequel des bandes de papier imprégnées de résine synthétique sont tirées d'un magasin à rouleau et coupées à la longueur souhaitée par un dispositif à guillotine.

5. Procédé selon la revendication 1, caractérisé en ce que la matière à presser (4) est respectivement constituée de deux piles de feuilles de papier imprégnées de résine synthétique, comportant entre elles un film de séparation inséré (4a), qui sont saisies et maintenues conjointement par les pinces de transport (7).

6. Dispositif de réalisation du procédé selon l'une quelconque des revendications 1-5 par une presse à chaud à un étage, qui présente une plaque chauffante supérieure et une plaque chauffante inférieure avec des tôles de compression qui leur sont respectivement fixées, et avec des dispositifs de transport maintenant et transportant la matière à presser sur ses deux bords longitudinaux, caractérisé en ce que les dispositifs de transport sont des pinces de transport individuelles (7) qui sont appliquées respectivement sur une corde de transport commune (8), tournant sans fin, entraînée en séquence, qui s'étend depuis une station de chargement (1) jusqu'au moins au-dessus de la presse à chaud à un étage (10).

7. Dispositif selon la revendication 6, caractérisé en ce que les deux cordes de transport sont formées respectivement par une chaîne articulée (8) tournant sans fin.

8. Dispositif selon la revendication 6, caractérisé en ce que les pinces de transport individuelles (7) sont montées respectivement sur un chariot (13) qui est acheminé sur des rails de guidage (15) dans la direction de transport et est relié à un maillon de la chaîne articulée (8).

9. Dispositif selon la revendication 6, caractérisé en ce que chaque pince de transport (7) présente deux branches de pince (17) qui peuvent se fermer en tenailles.

10. Dispositif selon les revendication 8 et 9, caractérisé en ce que les deux branches de pince (17) sont montées sur un support (19) relié de manière rigide au chariot (13) et peuvent être maintenues en position de fermeture, respectivement, via une fermeture à articulation (21, 22).

11. Dispositif selon la revendication 10, caractérisé en ce qu'un coulisseau de fermeture commun (22) déplaçable le long du support (19) est articulé avec les deux branches de pince (17) via deux éléments d'articulation (21).

12. Dispositif selon la revendication 9, caractérisé en ce que les branches de pince (17, 17') sont réalisées de manière interchangeable avec des longueurs différentes.

13. Dispositif selon la revendication 12, caractérisé en ce que les plaques chauffantes (25) de la presse à chaud à un étage (10) présentent des évidements latéraux (26) dans lesquels les branches de pince (17') font saillie dans le cas où elles sont plus longues.

14. Dispositif selon la revendication 13, caractérisé en ce que les évidements (26) sont obturés par des pièces d'ajustage (27).

15. Dispositif selon la revendication 14, caractérisé en ce que les pièces d'ajustage (27) sont maintenues dans les évidements (26) par voie magnétique.

16. Dispositif selon la revendication 6, caractérisé en ce que les tôles de compression (28) s'étendent, sur leurs bords longitudinaux, à fleur avec les bords longitudinaux des plaques chauffantes (25), les tôles de compression (28) sont centrées et les plaques chauffantes présentent plusieurs ouvertures d'aspiration (31) connectables avec une source de vide (32) pour maintenir les tôles de compression (28).

17. Dispositif selon la revendication 6 pour réaliser le procédé selon la revendication 2, caractérisé en ce que la presse à froid (11) présente des plaques de refroidissement qui sont plus étroites que les plaques chauffantes (25) de la presse à chaud à un étage (10).
